# EUROPÄISCHE PATENTSCHRIFT

(11) **EP 2 602 489 B1**
(45) Veröffentlichungstag und Bekanntmachung des Hinweises auf die Patenterteilung: **08.01.2020**
(21) Anmeldenummer: 12195045.5
(22) Anmeldetag: 30.11.2012
(51) Int. Cl.: F04D 25/08, F24C 15/20, H02K 9/06, F04D 29/58, F04D 17/16, H02K 5/20

(54) **Haushalts-Dunstabzugshaube sowie Verfahren zum Kühlen eines Motors einer Lüftervorrichtung der Haushalts-Dunstabzugshaube**
Household extractor hood and method for cooling a motor of a fan device of the extractor hood
Hotte aspirante ménagère et procédé de refroidissement d'un moteur d'un dispositif de ventilateur de la hotte aspirante

(30) Priorität: 09.12.2011 DE 102011088074
(43) Veröffentlichungstag der Anmeldung: 12.06.2013
(73) Patentinhaber: BSH Hausgeräte GmbH, 81739 München (DE)
(72) Erfinder: Meinhardt, Gert, 75053 Gondelsheim (DE); Metz, Daniel, 76689 Karlsdorf-Neuthard (DE); Schlotmann, Peter, 76229 Karlsruhe (DE)

(56) Entgegenhaltungen:
- DE-A1- 3 543 833
- DE-A1- 10 162 919
- DE-A1-102010 012 392
- DE-U- 7 521 820
- FR-A5- 2 209 410
- JP-A- S63 309 796
- US-A- 4 470 753
- US-A1- 2008 193 275
- US-B1- 6 216 686

## Beschreibung

Die vorliegende Erfindung betrifft eine Haushalts-Dunstabzugshaube mit einer Lüftervorrichtung sowie ein Verfahren zum Kühlen eines Motors einer Lüftervorrichtung einer Haushalts-Dunstabzugshaube.

Der Einsatz von Lüftervorrichtungen, beispielsweise Radialluftgebläsen, in Haushaltsgeräten, insbesondere Haushalts-Dunstabzugshauben, ist bekannt. Sie dienen beispielsweise dazu, Luft über Kochstellen abzusaugen. Die Luft wird dabei durch einen Filter gesaugt, um Fett und andere Stoffe aus der Luft herauszufiltern.

Es wird zwischen ein- und doppelflutigen Lüftervorrichtungen unterschieden. Einflutige Lüftervorrichtungen weisen ein Gehäuse auf, welches lediglich einen axialen Lufteinlass umfasst. Die dem axialen Lufteinlass gegenüberliegende Rückwand des Gehäuses ist geschlossen ausgebildet. Bei doppelflutigen Lüftervorrichtungen ist auch die Rückwand als Lufteinlass ausgebildet, so dass zwei gegenüberliegende, axiale Lufteinlässe gebildet werden.

Bei einflutigen Lüftervorrichtungen kann der das entsprechende Lüfterrad antreibende Elektromotor lufteinlassseitig oder rückwandseitig angeordnet sein. Die lufteinlassseitige Anordnung des Elektromotors weist den Vorteil auf, dass der Elektromotor mittels der durch den Lufteinlass einströmenden Luft gut gekühlt wird. Nachteilig ist jedoch, dass der lufteinlassseitige Elektromotor mittels eines Gitters oder Streben im Bereich des Lufteinlasses gehalten werden muss, was zu einem erhöhten Strömungswiderstand führt (auch als Versperreffekte bezeichnet).

Die rückwandseitige Anordnung des Elektromotors weist den Vorteil auf, dass die erwähnten Versperreffekte vermieden werden. Allerdings stellt sich eine ausreichende Kühlung des rückwandseitigen Elektromotors oft schwierig dar, da der Elektromotor typischerweise durch eine Lüfterradglocke von der durch den Lufteinlass einströmenden Luft abgeschirmt ist und diese den Elektromotor entsprechend nicht ausreichend kühlen kann. Die US 6,216,686 B1 zeigt beispielsweise eine rückwandseitige Anordnung des Elektromotors in einer Dunstabzugshaube.

Die US 2008/0193275 A1 zeigt einen Elektromotor, der eine Lüftervorrichtung zum Kühlen eines Rotors des Elektromotors umfasst. Die Lüftervorrichtung dreht sich mit dem Rotor zum Ausbilden eines Luftstroms durch den Rotor.

Die US 4,470,753 A zeigt ein Radialgebläse, insbesondere für Heiz- oder Klimaanlagen von Fahrzeugen, mit einem Gehäuse, dessen Frontseite mit einer Lufteinlassöffnung versehen ist und dessen Rückseite unter Belassen von Öffnungen einen Antriebsmotor für ein Lüfterrad aufnimmt, das einen Lüfterkranz mit Lüfterschaufeln und eine Nabe aufweist, die mittels eines Zwischenstückes ein einteiliges Bauteil bilden, wobei das Zwischenstück mit Durchbrechungen versehen ist, und wobei die Öffnungen in der Gehäuserückseite und/oder dem Antriebsmotor einen für das Ansaugen eines ausreichenden Kühlluftstromes begrenzten Querschnitt aufweisen.

Die DE 101 62 919 A1 zeigt eine Lüftervorrichtung für eine Dunstabzugshaube, wobei der das entsprechende Lüfterrad antreibende Elektromotor lufteinlassseitig angeordnet ist.

Die FR 2.209.410 A5 zeigt einen Dachventilator, der an einer Kaminöffnung angebracht wird und Verbrennungsgase ansaugt und in eine Umgebung herausbeschleunigt. Der Dachlüfter umfasst einen Motor, der ein Lüfterrad zum Erzeugen eines Gasstroms antreibt, eine Ansaugseite und eine gegenüber der Ansaugseite angeordnete Rückwand, die Öffnungen zum Ansaugen von Frischluft aufweist.

Die DE 35 43 822 A1 zeigt einen weiteren Dachventilator.

Vor diesem Hintergrund besteht eine Aufgabe der vorliegenden Erfindung darin, einen verbesserten Ansatz zur Kühlung eines Motors einer Lüftervorrichtung einer Haushalts-Dunstabzugshaube bereitzustellen.

Zur Lösung dieser Aufgabe wird eine Haushalts-Dunstabzugshaube mit einer Lüftervorrichtung gemäß dem Anspruch 1 vorgeschlagen, welche ein Gehäuse, einen Motor, ein Lüfterrad, einen Raum und Öffnungen aufweist. Das Gehäuse umfasst einen Lufteinlass und einen Luftauslass. Der Motor ist an einer dem Lufteinlass gegenüberliegenden Rückwand des Gehäuses angebracht. Das Lüfterrad ist von dem Motor antreibbar. Der Raum ist axial von dem Lüfterrad und der Rückwand begrenzt. Radial steht der Raum mittels eines Ringspalts mit dem Luftauslass in luftleitender Verbindung. Weiterhin umfasst die Haushalts-Dunstabzugshaube ein Gehäuse, welches den äußeren Abschluss des Motors bildet und radiale Öffnungen zu dem Raum aufweist, und einen rückwandseitigen Lagerschild, der Öffnungen aufweist. Zumindest in einem freiblasenden oder teilgedrosselten Betrieb der Lüftervorrichtung ist ein Unterdruck in dem Raum erzeugbar. Die Öffnungen sind zur Umgebung hin in der Rückwand ausgebildet. Die Öffnungen stehen jeweils in luftleitender Verbindung mit den Öffnungen des Lagerschilds, wobei ein Kanal mittels der Öffnungen des Lagerschilds, des Gehäuses und der radialen Öffnungen desselben definiert ist. Von der Öffnung in den Raum strömende Luft kühlt den Motor. Luft strömt durch die radialen Öffnungen des Gehäuses aus dem weiteren Gehäuse und heraus in den Raum. Es ist ein Mittel in Form eines Schaufelrads auf einem Rotor des Motors innerhalb des weiteren Gehäuses vorgesehen, welches dazu eingerichtet ist, zumindest in einem vollständig gedrosselten Betrieb der Lüftervorrichtung ein Rückströmen von Luft aus dem Raum zur Öffnung hin zu verhindern.

Es wurde erkannt, dass sich ein Unterdruck in dem Raum zwischen dem Lüfterrad und der Rückwand dazu nutzen lässt, einen Luftstrom durch die Öffnung in der Rückwand zu erzeugen, welcher den Motor kühlt. Trotz der rückwandseitigen Anordnung des Motors und Abschottung desselben von dem Lufteinlass durch das Lüfterrad lässt sich der Motor somit ausreichend kühlen.

"Axial" und "radial" bezieht sich vorliegend immer auf die Lüfterraddrehachse, soweit nichts Gegenteiliges angegeben ist. "Freiblasend" meint, dass weder der Lufteinlass noch der Luftauslass der Lüftervorrichtung versperrt ist. "Teilgedrosselt" meint, dass der Lufteinlass und/oder Luftauslass der Lüftervorrichtung teilweise versperrt ist. Eine solche teilweise Drosselung ergibt sich bei Haushalts-Dunstabzugshauben dadurch, dass die Lüftervorrichtung mit einer Verrohrung zum Abführen der gefilterten Luft verbunden wird, wie es typischerweise in Küchen der Fall ist. Bei dem Motor handelt es sich typischerweise um einen Elektromotor. Das Gehäuse ist typischerweise als Spiralgehäuse ausgeführt.

Der Lufteinlass kann axial und der Luftauslass kann tangential ausgeführt sein. "Tangential" meint eine Richtung entlang einer Tangente zu einem Kreis um die Lüfterdrehachse.

Nicht-erfindungsgemäß sind die Öffnungen derart vorgesehen, dass die Luft entlang einer Außenseite des Motors strömt. Je nachdem, ob es sich um einen Motor mit Innenläufer oder Außenläufer handelt, kann die Außenseite des Motors ortsfest oder bewegt sein. Beispielsweise kann die Außenseite in Form eines Gehäuses ausgebildet sein.

Erfindungsgemäß weist der Motor einen Kanal für ein Hindurchströmen der Luft und dadurch Kühlen des Motors auf, welcher einerseits mit der Öffnung und andererseits mit dem Raum in luftleitender Verbindung steht. Eine solche "Kühlung von innen" kann zusätzlich zu der vorstehend beschriebenen Kühlung des Motors von außen vorgesehen sein.

Gemäß einer weiteren Ausführungsform führt der Kanal durch einen Stator und/oder Rotor des Motors und/oder entlang dieser. Bei einer solchen Kühlung des Rotors ist mit einer nur geringen Geräuschentwicklung zu rechnen, da die Umfangsgeschwindigkeiten gering sind.

Bevorzugt führt der Kanal an elektrischen Wicklungen des Motors vorbei. Somit kann eine Kühlung gezielt dort erfolgen, wo die Wärme entsteht.

Gemäß einer weiteren Ausführungsform ist ein Mittel zum Verwirbeln, insbesondere zum turbulenten und/oder spiralförmigen Verwirbeln, der durch den Stator und/oder Rotor strömenden oder an diesen vorbeiströmenden Luft vorgesehen. Das Führen von verwirbelter Luft durch den Stator oder Rotor oder durch beide verbessert eine Kühlung derselben noch weiter. Ferner kann die verwirbelte Luft entlang des Stators oder Rotors oder entlang beider zur besseren Kühlung geführt werden.

Das Lüfterrad kann eine Nabe und Schaufeln aufweisen, welche mittels eines flächigen Verbindungselements miteinander verbunden sind. Das Lüfterrad kann von dem Motor mittels der Nabe antreibbar vorgesehen sein. Das flächige Verbindungselement kann zusammen mit der Rückwand den Raum axial begrenzen.

Gemäß einer Ausführungsform ist das flächige Verbindungselement geschlossen und/oder glockenförmig ausgebildet. "Geschlossen" meint, dass keinerlei insbesondere axiale Durchbrüche in dem flächigen Verbindungselement vorgesehen sind, die ein Strömen von Luft aus dem Druckraum in dem Lüfterrad in den zwischen dem Verbindungselement und der Rückwand gebildeten Raum zulassen würden. Turbulenzen bzw. eine entsprechende Geräuschentwicklung kann somit vermieden werden.

Es ist ein Mittel vorgesehen, welches dazu eingerichtet ist, zumindest in einem vollständig gedrosselten Betrieb der Lüftervorrichtung ein Rückströmen von Luft aus dem Raum zur Öffnung hin zu verhindern. Mit "vollständig gedrosseltem Betrieb" ist gemeint, dass der Einlass und/oder Auslass des Lüfters vollständig verschlossen ist. Im vollständig gedrosselten Betrieb der Lüftervorrichtung kann es, je nach Bauart, vorkommen, dass in dem Raum anstelle eines Unterdrucks ein Überdruck entsteht. In diesem Fall würde Luft aus dem Raum in die Umgebung zurückgedrückt werden. Dies ist aber für bestimmte Anwendungen nicht wünschenswert. Das Mittel ist in Form mehrerer kleiner Schaufeln ausgebildet, welche auf dem Rotor des Motors angrenzend an die Öffnung oder angrenzend an einen mit der Öffnung in Verbindung stehenden Kanal positioniert sind. Der von dem Mittel erzeugte Gegendruck ist dabei im Verhältnis zu dem im freiblasenden oder teilgedrosselten Betrieb der Lüftervorrichtung erzeugten Unterdruck in dem Raum derart klein, dass die Luft im freiblasenden oder teilgedrosselten Betrieb unbeschadet des Mittels von der Öffnung in den Raum strömen kann.

Der Erfindung umfasst ebenfalls ein Verfahren gemäß dem Anspruch 6, dieses Verfahren stellt ein Verfahren zum Kühlen eines Motors einer Lüftervorrichtung einer Haushalts-Dunstabzugshaube, wie vorstehend beschrieben, bereit. In einem freiblasenden oder teilgedrosselten Betrieb der Lüftervorrichtung wird ein Unterdruck in dem Raum erzeugt, wodurch Luft durch die Öffnung in den Raum strömt und dabei den Motor kühlt, wobei zumindest in einem vollständig gedrosselten Betrieb der Lüftervorrichtung mit Hilfe des Schaufelrads ein Rückströmen von Luft aus dem Raum zur Öffnung hin verhindert wird.

Nicht-erfindungsgemäß wird die Luft außenseitig an dem Motor vorbeigeführt.

Erfindungsgemäß wird die Luft durch den Motor hindurchgeführt. Gemäß einer weiteren Ausführungsform wird die Luft durch einen Stator und/oder Rotor des Motors oder an diesen vorbei geführt. Bevorzugt wird die Luft an elektrischen Wicklungen des Motors vorbeigeführt.

Gemäß einer Ausführungsform wird die durch den Stator oder Rotor strömende oder an diesen vorbeiströmende Luft verwirbelt, insbesondere turbulent und spiralförmig verwirbelt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen der Lüftervorrichtung, der Haushalts-Dunstabzugshaube oder des Verfahrens. Der Fachmann wird dabei auch Einzelaspekte als Verbesserungen oder Ergänzungen zu der jeweiligen Grundform der Erfindung hinzufügen oder abändern.

Der Umfang der Erfindung ist ausschließlich durch die beigefügten Ansprüche 1 und 6 definiert. Weitere vorteilhafte Ausgestaltungen und Aspekte der Erfindung sind Gegenstand der Unteransprüche. Im Weiteren wird die Erfindung anhand von Ausführungsformen unter Bezugnahme auf die beigelegten Figuren näher erläutert.

Es zeigt dabei:
Fig. 1: schematisch einen Schnitt durch eine Haushalts-Dunstabzugshaube mit einer Lüftervorrichtung gemäß einer nicht-erfindungsgemäßen Ausführungsform;
Fig. 2: eine Lüftervorrichtung gemäß einer erfindungsgemäßen Ausführungsform;
Fig. 3: einen Teilbereich aus Fig. 2 in größerem Detail;
Fig. 4: eine vergrößerte Ansicht IV aus Fig. 3; und
Fig. 5: eine Ansicht V aus Fig. 4.

In den Figuren bezeichnen gleiche Bezugszeichen gleiche oder funktionsgleiche Komponenten, soweit nichts Gegenteiliges angegeben ist.

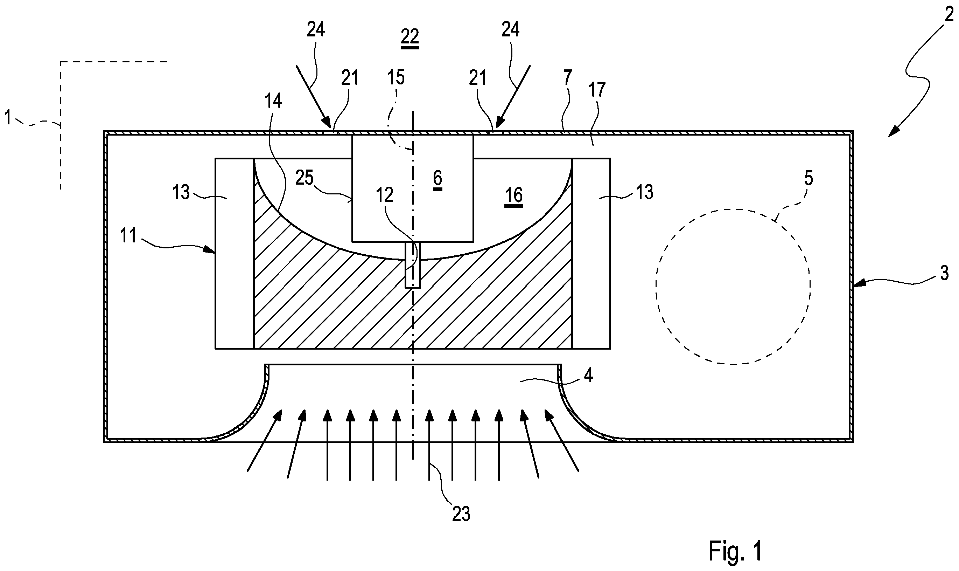

Fig. 1 zeigt schematisch eine Haushalts-Dunstabzugshaube 1 mit einer Lüftervorrichtung 2 gemäß einer nicht-erfindungsgemäßen Ausführungsform. Die Haushalts-Dunstabzugshaube 1 kann in Form einer Haube oder Esse ausgebildet und über einer Kochstelle montiert sein.

Die Lüftervorrichtung 2 umfasst ein Spiralgehäuse 3. Das Spiralgehäuse weist einen axialen Lufteinlass 4 sowie einen tangentialen Luftauslass 5 auf. Der Luftauslass 5 ist lediglich gestrichelt angedeutet, da dieser außerhalb der dargestellten Schnittebene liegt. Der Luftauslass 5 kann rund oder eckig ausgeführt sein.

Die Lüftervorrichtung weist weiterhin einen Elektromotor 6 auf. Der Elektromotor 6 ist an einer dem Lufteinlass 4 gegenüberliegenden Rückwand 7 des Spiralgehäuses 3 angeflanscht.

Ferner umfasst die Lüftervorrichtung 2 ein Lüfterrad 11. Das Lüfterrad 11 umfasst eine mittige Nabe 12, Schaufeln 13 sowie ein flächiges Verbindungselement in Form einer Glocke 14. Die Glocke 14 verbindet die Nabe 12 mit den Schaufeln 13 und ist luftundurchlässig ausgebildet. Das Lüfterrad 11 wird von dem Elektromotor 6 angetrieben und rotiert dabei um eine mit 15 bezeichnete Drehachse. Soweit vorliegend von "axial" oder "radial" die Rede ist, so bezieht sich dies auf die Drehachse 15. "Tangential" bezieht sich auf einen Kreis um die Drehachse 15.

Die Glocke 14 und die Rückwand 7 begrenzen miteinander axial einen Raum 16. Der Raum 16 steht radial mittels eines Ringspalts 17 mit dem Luftauslass 5 in luftleitender Verbindung.

In der Rückwand 7 sind zwei Öffnungen 21 zur Umgebung 22 hin ausgebildet.

In einem freiblasenden oder teilgedrosselten Betrieb der Lüftervorrichtung 2 dreht der Elektromotor 6 das Lüfterrad 11, welches Luft 23 von dem Lufteinlass 4 zu dem Luftauslass 5 transportiert. Dadurch wird beispielsweise Abluft über einer Kochstelle abtransportiert. Die Luft 23 kann beispielsweise vor dem Lufteinlass 4 gefiltert werden. Mit "freiblasendem Betrieb" ist gemeint, dass weder der Einlass 4 noch der Auslass 5 versperrt sind. Mit "teilgedrosseltem Betrieb" ist gemeint, dass der Lufteinlass 4 oder der Luftauslass 5 oder auch beide teilweise versperrt sind. So bildet beispielsweise eine sich an den Luftauslass 5 anschließende Verrohrung eine solche Versperrung. Eine derartige Verrohrung ist beispielsweise in Küchen anzutreffen und dient dazu, die Luft nach außerhalb des Gebäudes zu transportieren.

In dem freiblasenden oder teilgedrosselten Betrieb entsteht ein Unterdruck in dem Raum 16, wozu die Lüftervorrichtung 2, insbesondere das Lüfterrad 11, geeignet ausgebildet, insbesondere dimensioniert, ist. Dadurch strömt Luft 24 aus der Umgebung 22 durch die Öffnungen 21 in den Raum 16 ein und strömt dabei an der Außenseite 25 des Elektromotors 6 vorbei und kühlt diesen.

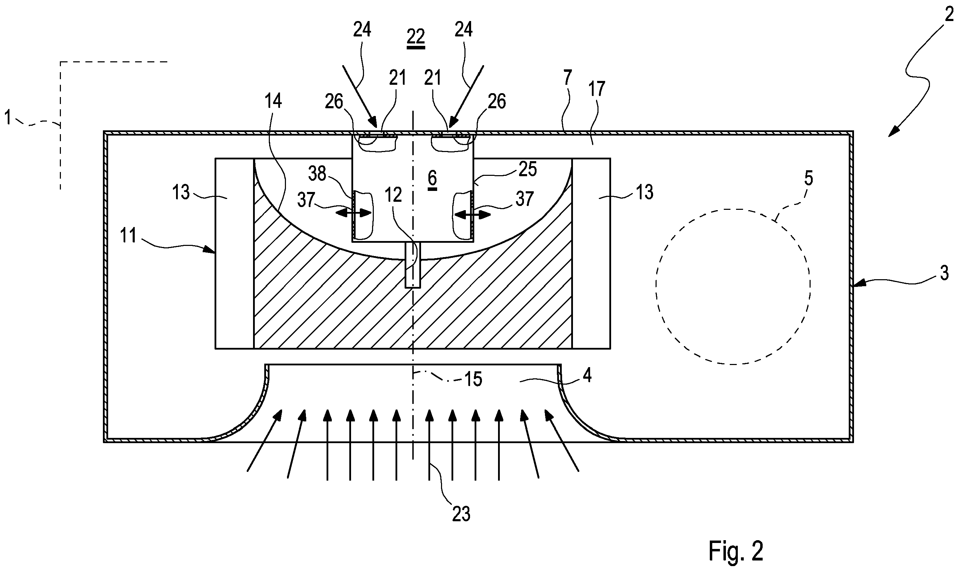

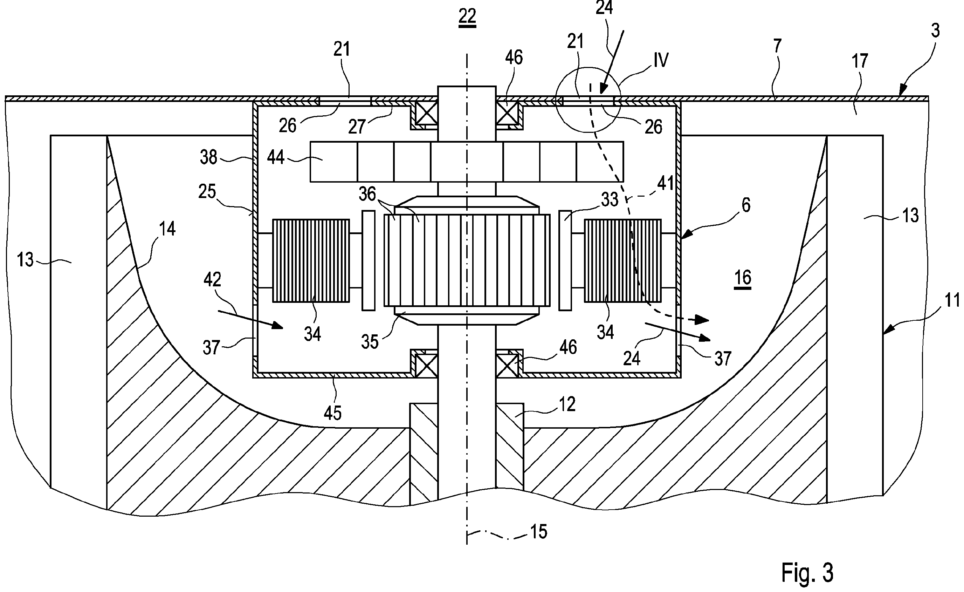

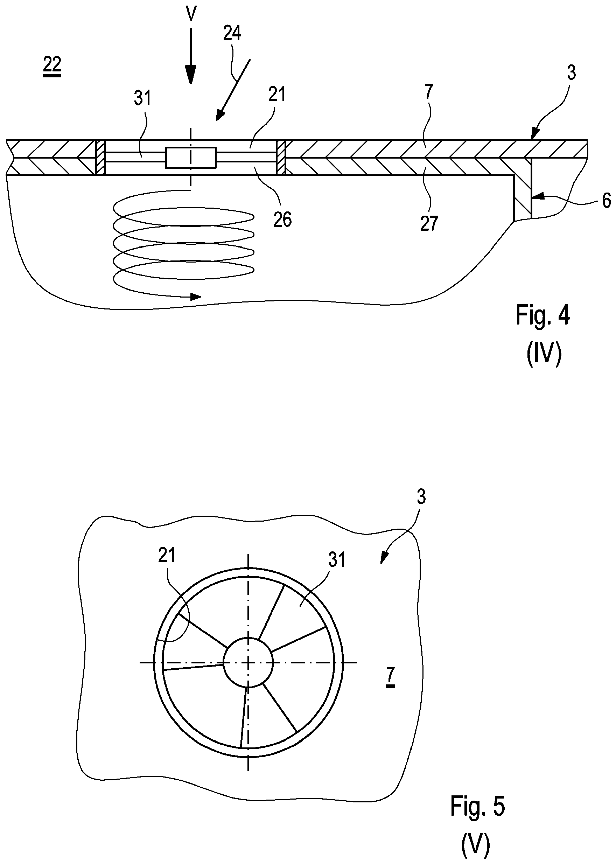

Fig. 2 zeigt eine Lüftervorrichtung 2 gemäß einer erfindungsgemäßen Ausführungsform. Nachfolgend wird lediglich auf die Unterschiede gegenüber der Ausführungsform nach Fig. 1 eingegangen. Fig. 3 zeigt einen Ausschnitt aus Fig. 2 in größerem Detail. Fig. 4 zeigt eine Ansicht IV aus Fig. 3 und Fig. 5 eine Ansicht V aus Fig. 4.

Bei der Lüftervorrichtung 2 gemäß den Fig. 2-5 stehen die Öffnungen 21 in der Rückwand 7 jeweils in luftleitender Verbindung mit Öffnungen 26 (siehe Fig. 4) in einem rückwandseitigen Lagerschild 27 des Elektromotors 6. In den Öffnungen 21, 26 kann ein Verwirbler 31 angeordnet sein, welcher dafür sorgt, dass die einströmende Luft 24 verwirbelt wird. Die verwirbelte Luft trifft dann auf einen Stator 33 des Elektromotors 6 mit elektrischen Wicklungen 34 und kühlt diesen. Gemäß einer Ausführungsform kann die Luft auch auf einen Rotor 35 des Elektromotors 6 treffen, welcher Magnete 36 umfasst, und auch diesen kühlen. Gemäß einer weiteren Ausführungsform weist der Rotor 35 die Wicklungen 34 und der Stator die Magnete 36 auf.

Anschließend verlässt die Luft 24 wieder den Elektromotor 6 und strömt durch die radialen Öffnungen 37 aus einem Gehäuse 38, welches den äußeren Abschluss des Elektromotors 6 bildet, heraus in den Raum 16. Der in dem Elektromotor 6 mittels der Öffnungen 26 und 37 sowie dem Gehäuse 38 definierte Kanal ist mit 41 bezeichnet.

Im vollständig gedrosselten Betrieb der Lüftervorrichtung 2, also wenn entweder der Lufteinlass 4 oder der Luftauslass 5 oder beide vollständig verschlossen sind, kann es dazu kommen, dass in dem Raum 16 ein Überdruck herrscht. Ohne entsprechende Gegenmaßnahmen würde dann Luft 42 (siehe Fig. 3) aus dem Raum 16 durch die Öffnungen 37, 26 und 21 zurück in die Umgebung 43 strömen. Um dies zu unterbinden, ist ein Mittel in Form eines kleinen Schaufelrads 44 auf dem Rotor 35 angebracht, welches den entsprechenden Gegendruck erzeugt. Dieser Gegendruck ist jedoch gegenüber dem Unterdruck, welcher in dem Raum 16 im freiblasenden oder teilgedrosselten Betrieb der Lüftervorrichtung 2 herrscht, klein, so dass bei den beiden letztgenannten Betriebsarten die Luft 24 nach wie vor problemlos von den Öffnungen 21 in den Raum 16 strömen und dabei den Elektromotor 6 effektiv kühlen kann.

Der Vollständigkeit halber sei erwähnt, dass das rückwandseitige Lagerschild 27 sowie ein lufteinlassseitiges Lagerschild 45 mittels Lager 46 den Rotor 35 drehbar gelagert halten. Der Rotor 35 ist an seinem einen Ende fest mit der Nabe 12 des Lüfterrads 11 verbunden.

Obwohl die Erfindung anhand von Ausführungsbeispielen beschrieben wurde, ist sie vielfältig modifizierbar. Der Umfang der Erfindung ist ausschließlich durch die beigefügten Ansprüche definiert.

### Verwendete Bezugszeichen:

- 1: Dunstabzugshaube
- 2: Lüftervorrichtung
- 3: Spiralgehäuse
- 4: Lufteinlass
- 5: Luftauslass
- 6: Elektromotor
- 7: Rückwand
- 11: Lüfterrad
- 12: Nabe
- 13: Schaufel
- 14: Glocke
- 15: Drehachse
- 16: Raum
- 17: Ringspalt
- 21: Öffnung
- 22: Umgebung
- 23: Luft
- 24: Luft
- 25: Außenseite
- 26: Öffnung
- 27: Lagerschild
- 31: Verwirbler
- 33: Stator
- 34: elektrische Wicklungen
- 35: Rotor
- 36: Magnet
- 37: Öffnung
- 41: Kanal
- 42: Luft
- 43: Umgebung
- 44: Schaufelrad
- 45: Lagerschild
- 46: Lager

## Patentansprüche

1. Haushalts-Dunstabzugshaube (1) mit einer Lüftervorrichtung (2), mit einem Gehäuse (3), welches einen Lufteinlass (4) und einen Luftauslass (5) aufweist, einem an einer dem Lufteinlass (4) gegenüberliegenden Rückwand (7) des Gehäuses (3) angebrachten Motor (6), einem Lüfterrad (11), welches von dem Motor (6) antreibbar ist, einem Raum (16), welcher axial von dem Lüfterrad (11) und der Rückwand (7) begrenzt ist und radial mittels eines Ringspalts (17) mit dem Luftauslass (5) in luftleitender Verbindung steht, einem weiteren Gehäuse (38), welches den äußeren Abschluss des Motors (6) bildet und radiale Öffnungen (37) zu dem Raum (16) aufweist, einem rückwandseitigen Lagerschild (27), der Öffnungen (26) aufweist, wobei zumindest in einem freiblasenden oder teilgedrosselten Betrieb der Lüftervorrichtung (2) ein Unterdruck in dem Raum (16) erzeugbar ist, und Öffnungen (21) zur Umgebung (22) in der Rückwand (7), wobei die Öffnungen (21) der Rückwand (7) jeweils in luftleitender Verbindung mit den Öffnungen (26) des Lagerschilds (27) stehen, wobei ein Kanal (41) mittels der Öffnungen (26) des Lagerschilds (27), des weiteren Gehäuses (38) und der radialen Öffnungen (37) desselben definiert ist, wobei im Betrieb der Lüftervorrichtung von den Öffnungen (21) der Rückwand (7) in den Raum (16) strömende Luft (24) den Motor (6) kühlt und die Luft (24) durch die radialen Öffnungen (37) des weiteren Gehäuses (38) aus dem weiteren Gehäuse (38) und heraus in den Raum (16) strömt, und wobei ein Mittel in Form eines Schaufelrads (44) auf einem Rotor (35) des Motors (6) innerhalb des weiteren Gehäuses (38) vorgesehen ist, welches dazu eingerichtet ist, zumindest in einem vollständig gedrosselten Betrieb der Lüftervorrichtung (2) ein Rückströmen von Luft (42) aus dem Raum (16) zu den Öffnungen (21) der Rückwand (7) hin zu verhindern.

2. Haushalts-Dunstabzugshaube nach Anspruch 1, **dadurch gekennzeichnet, dass** der Kanal (41) durch einen Stator (33) und/oder den Rotor (35) des Motors (6) und/oder entlang dieser führt.

3. Haushalts-Dunstabzugshaube nach Anspruch 2, **dadurch gekennzeichnet, dass** der Kanal (41) an elektrischen Wicklungen (34) des Motors (6) vorbeiführt.

4. Haushalts-Dunstabzugshaube nach Anspruch 2 oder 3, **dadurch gekennzeichnet, dass** ein Mittel (31) zum Verwirbeln, insbesondere turbulenten und/oder spiralförmigen Verwirbeln, der durch den Stator (33) und/oder Rotor (35) strömenden oder an diesen vorbeiströmenden Luft (24) vorgesehen ist.

5. Haushalts-Dunstabzugshaube nach einem der Ansprüche 1 - 4, **dadurch gekennzeichnet, dass** das Lüfterrad (11) ein flächiges Verbindungselement (14), insbesondere in Form eine Glocke, aufweist, welches den Raum (16) axial begrenzt.

6. Verfahren zum Kühlen eines Motors (6) einer Haushalts-Dunstabzugshaube (1) nach einem der Ansprüche 1 - 5, wobei zumindest in einem freiblasenden oder teilgedrosselten Betrieb der Lüftervorrichtung (2) ein Unterdruck in dem Raum (16) erzeugt wird, wodurch Luft (24) durch die Öffnungen (21) der Rückwand (7) in den Raum (16) strömt und dabei den Motor (6) kühlt,
wobei die Luft (24) durch die radialen Öffnungen (37) des weiteren Gehäuses (38) aus dem weiteren Gehäuse (38) und heraus in den Raum (16) strömt, wobei
zumindest in einem vollständig gedrosselten Betrieb der Lüftervorrichtung (2) mit Hilfe des Schaufelrads (44) ein Rückströmen von Luft (42) aus dem Raum (16) zu den Öffnungen (21) der Rückwand (7) hin verhindert wird.

7. Verfahren nach Anspruch 6, **dadurch gekennzeichnet, dass** die Luft (24) durch den Motor (6) hindurchgeführt wird.

8. Verfahren nach Anspruch 7, **dadurch gekennzeichnet, dass** die Luft (24) durch einen Stator (33) und/oder den Rotor (35) des Motors (6) und/oder entlang dieser geführt wird.

9. Verfahren nach Anspruch 8, wobei die durch den Stator (33) oder Rotor (35) strömende oder an diesen vorbeiströmende Luft (24), insbesondere turbulent oder spiralförmig, verwirbelt wird.

## Claims

1. Household extractor hood (1) with a fan device (2), with a housing (3), which has an air inlet (4) and an air outlet (5), a motor (6) attached to a rear wall (7) of the housing (3) lying opposite to the air inlet (4), a fan wheel (11), which can be driven by the motor (6), a space (16) which is axially delimited from the fan wheel (11) and the rear wall (7) and has a radial air-guiding connection with the air outlet (5) by means of an annular gap (17), a further housing (38), which forms the outer end plate of the motor (6) and has radial openings (37) with respect to the space (16), a bearing shield (27) on the rear wall side, which has openings (26), wherein a vacuum can be produced in the space (16) at least in a free-blowing or partially throttled operation of the fan device (2), and openings (21) to the environment (22) in the rear wall (7), wherein the openings (21) of the rear wall (7) have in each case an air-conducting connection with the openings (26) of the bearing shield (27), wherein a channel (41) is defined by means of the openings (26) of the bearing shield (27), of the further housing (38) and of the radial openings (37) of the same, wherein during operation of the fan device air (24) flowing from the openings (21) of the rear wall (7) into the space (16) cools the motor (6) and the air (24) flows through the radial openings (37) of the further housing (38) out of the further housing (38) and into the space (16) and wherein a means in the form of an impeller (44) on a rotor (35) of the motor (6) is provided within the further housing (38), which, at least in a completely throttled operation of the fan device (2), is designed to prevent a backflow of air (42) out of the space (16) toward the openings (21) in the rear wall (7).

2. Household extractor hood according to claim 1, **characterised in that** the channel (41) passes through a stator (33) and/or the rotor (35) of the motor (6) and/or along the same.

3. Household extractor hood according to claim 2, **characterised in that** the channel (41) bypasses electrical windings (34) of the motor (6).

4. Household extractor hood according to claim 2 or 3, **characterised in that** a means (31) is provided for the swirling, in particular the swirling in a turbulent and/or spiral-shaped manner, of the air (24) flowing through the stator (33) and/or rotor (35) or bypassing the same.

5. Household extractor hood according to one of claims 1 - 4, **characterised in that** the fan wheel (11) has a planar connecting element (14), in particular in the form of a bell, which axially delimits the space (16).

6. Method for cooling a motor (6) of a household extractor hood (1) according to one of claims 1 - 5, wherein at least in a free-blowing or partially throttled operation of the fan device (2) a vacuum is produced in the space (16), as a result of which air (24) flows through the openings (21) in the rear wall (7) into the space (16) and in the process cools the motor (6), wherein the air (24) flows through the radial openings (37) of the further housing (38) out of the further housing (38) and into the space (16), wherein at least in a completely throttled operation of the fan device (2) a backflow of air (42) out of the space (16) toward the openings (21) in the rear wall (7) is prevented with the aid of the impeller (44).

7. Method according to claim 6, **characterised in that** the air (24) is guided through the motor (6).

8. Method according to claim 7, **characterised in that** the air (24) is guided through a stator (33) and/or the rotor (35) of the motor (6) and/or along the same.

9. Method according to claim 8, wherein the air (24) flowing through the stator (33) or rotor (35) or bypassing the same is swirled in particular in a turbulent or spiral-shaped manner.

## Revendications

1. Hotte aspirante ménagère (1) avec un dispositif de ventilateur (2), avec une carcasse (3), laquelle présente une entrée d'air (4) et une sortie d'air (5), un moteur (6) installé sur une paroi arrière (7) de la carcasse (3) opposée à l'entrée d'air (4), une roue de ventilateur (11) pouvant être actionnée par le moteur (6), un espace (16) délimité axialement par la roue de ventilateur (11) et la paroi arrière (7) et se trouvant en liaison aéraulique radiale avec la sortie d'air (5) au moyen d'une fente annulaire (17), une carcasse supplémentaire (38), qui forme le parachèvement extérieur du moteur (6) et présente des orifices radiaux (37) vers l'espace (16), un flasque côté paroi arrière (27), qui présente des orifices (26), dans laquelle au moins dans un fonctionnement à soufflage libre ou partiellement réduit du dispositif de ventilateur (2), une dépression peut être générée dans l'espace (16), et des orifices (21) vers l'environnement (22) dans la paroi arrière (7), dans laquelle les orifices (21) de la paroi arrière (7) se trouvent respectivement en liaison aéraulique avec les orifices (26) du flasque (27), dans laquelle un conduit (41) est défini au moyen des orifices (26) du flasque (27), de la carcasse supplémentaire (38) et des orifices radiaux (37) de celle-ci, dans laquelle en fonctionnement du dispositif de ventilateur, l'air (24) s'écoulant des orifices (21) de la paroi arrière (7) dans l'espace (16) refroidit le moteur (6) et l'air (24) s'écoule à travers les orifices radiaux (37) de la carcasse supplémentaire (38) au départ de la carcasse supplémentaire (38) et hors de celle-ci vers l'espace (16), et dans laquelle un moyen sous la forme d'une roue à aubes (44) est prévu sur un rotor (35) du moteur (6) à l'intérieur de la carcasse supplémentaire (38), lequel est aménagé afin d'empêcher au moins dans un fonctionnement intégralement réduit du dispositif de ventilateur (2) un retour de l'air (42) au départ de l'espace (16) vers les orifices (21) de la paroi arrière (7).

2. Hotte aspirante ménagère selon la revendication 1, **caractérisée en ce que** le conduit (41) mène à travers un stator (33) et/ou le rotor (35) du moteur (6) et/ou le long de celui-ci.

3. Hotte aspirante ménagère selon la revendication 2, **caractérisée en ce que** le conduit (41) passe devant des bobinages électriques (34) du moteur (6).

4. Hotte aspirante ménagère selon la revendication 2 ou 3, **caractérisée en ce qu'**un moyen (31) de tourbillonnement, en particulier de tourbillonnement turbulent et/ou spiralé, de l'air (24) traversant le stator (33) et/ou le rotor (35) ou s'écoulant devant ceux-ci est prévu.

5. Hotte aspirante ménagère selon l'une des revendications 1 à 4, **caractérisée en ce que** la roue de ventilateur (11) présente un élément de liaison mince (14), en particulier sous la forme d'une cloche, qui limite axialement l'espace (16).

6. Procédé de refroidissement d'un moteur (6) d'une hotte aspirante ménagère (1) selon l'une des revendications 1 à 5, dans lequel au moins dans un fonctionnement à soufflage libre ou partiellement réduit du dispositif de ventilateur (2), une dépression est générée dans l'espace (16), moyennant quoi l'air (24) s'écoule à travers les orifices (21) de la paroi arrière (7) dans l'espace (16) et refroidit ce faisant le moteur (6), dans lequel l'air (24) s'écoule à travers les orifices radiaux (37) de la carcasse supplémentaire (38) au départ de la carcasse supplémentaire (38) et en dehors de l'espace (16), dans lequel au moins dans un fonctionnement intégralement réduit du dispositif de ventilateur (2), un retour de l'air (42) au départ de l'espace (16) vers les orifices (21) de la paroi arrière (7) est empêché à l'aide de la roue à aubes (44).

7. Procédé selon la revendication 6, **caractérisé en ce que** l'air (24) est mené à travers le moteur (6).

8. Procédé selon la revendication 7, **caractérisé en ce que** l'air (24) est mené à travers un stator (33) et/ou le rotor (35) du moteur (6) et/ou le long de ceux-ci.

9. Procédé selon la revendication 8, dans lequel l'air (24) mené à travers le stator (33) ou le rotor (35) ou passant devant ceux-ci est tourbillonné en particulier de façon turbulente ou spiralée.
